# EUROPEAN PATENT SPECIFICATION

(11) **EP 1 307 807 B1**
(45) Date of publication and mention of the grant of the patent: **14.11.2007**
(21) Application number: 01953217.5
(22) Date of filing: 27.07.2001
(51) Int. Cl.: G06F 3/00

(54) **COMPUTING DEVICE WITH IMPROVED USER INTERFACE FOR MENUS**
RECHNERGERÄT MIT VERBESSERTER BENUTZERSCHNITTSTELLE FÜR MENÜS
DISPOSITIF INFORMATIQUE AVEC INTERFACE UTILISATEUR AMELIOREE POUR MENUS

(30) Priority: 28.07.2000 GB 0018631; 05.12.2000 GB 0029609
(43) Date of publication of application: 07.05.2003
(73) Proprietor: Symbian Limited, London W1H 1DS (GB)
(72) Inventor: MARTYN, Matthieu, Kennedy, London E3 5DA (GB); JENSON, Scott, London NW6 7AX (GB)
(86) International application number: PCT/GB2001/003386
(87) International publication number: WO 2002/010892

(56) References cited:
- EP-A- 0 891 066
- EP-A- 1 004 957
- US-A- 5 396 264
- US-A- 6 069 625

## Description

### BACKGROUND TO THE INVENTION

### 1. Field of the Invention

This invention relates to a computing device with an improved user interface for menus. The term 'computing device' refers to any kind of device which can process and display information. The invention has specific application to mobile computing devices. The term 'mobile computing devices' refers to cover any kind of mobile computing device including radio (mobile) telephones, smart phones, communicators, PDAs, personal organisers and wireless information devices.

### 2. Description of the Prior Art

One of the problems facing the designers of computing devices with small screens is how to allow the user to access data and activate a desired function. Conventionally, a small display size has meant that several hierarchies of functions have to be offered to a user: the interface can be thought of as having many layers, with the user having to first locate the correct top level function and then, within that function, progressively drill down (sometimes through 3 or more layers) to complete the required task. Multiple levels can be minimised if relatively lengthy menus (e.g. lists of names or sequences of icons) are used at any given level. Long menus have their drawbacks however: users cannot see all items at once and need to scroll down to find the required item. The user may have to scroll relatively slowly, so as not to miss the required item. Fast scrolling is therefore often not feasible in such systems. All this means that many items in the menu are relatively inaccessible.

In some devices, a menu of several available options is displayed: the menu commands may then be divided into functional groups, with the most useful functional group at the top of the menu; the most useful command within that group is then placed at the *top* of group. In other devices, only one option is on the screen at any one time, making it harder for a user to appreciate the available options and therefore navigate effectively.

Conventionally, text based menu lists with hard boundaries (i.e. you cannot scroll past the top or the bottom of the list) are arranged with the most commonly selected item at the *top* of the list. The next most common item in the list typically is then placed next. This approach may derive from PC-based drop-down menu design techniques. In key-pad driven menus, as well as menus which can be accessed using a pointing device, a highlight bar appears over the item in the list which is selectable (i.e. which can be selected, usually with a single further user action). Hence, in conventional mobile telephone menus, the highlight bar appears over the *top* item in the list as a default (i.e. when the list is first opened). Another approach is to put the most commonly used item at the bottom of the scrollable list. For example, in EP 1004957, a navigation roller is positioned at the lower edge of the mobile telephone display; a scrollable list of menu items is arranged in a vertical list, with the most commonly used item at the bottom of that list, closest to the navigation roller. Pressing in the navigation roller selects the item at the bottom of the list It is also know to dynamically re-order menu items in a list according to their use frequency; US 5396264 shows this. But the most commonly used items are again placed at one end of a list.

Various methods of scrolling through a list of items can be provided. The simplest form of scrolling is a simple stepping through the list, with each operation of the relevant scroll key (usually the up or down key) moving the highlighting on by one item. The scroll keys may be "repeat" keys, so that holding down a scroll key steps continuously through the items. Holding down the scroll key may also cause the scroll speed to increase, so that a rapid movement through the list can be achieved. (Repeat functions can be of very limited use where the screen size is small however, as lists are often larger than the screen and consequently all list items cannot be displayed at once, so that the user may have little idea where they are repeat scrolling to). In addition to scroll keys, a mouse or other device can be used.

On a more theoretical basis, an effective user interface enables the user to comprehend the changing internal status of the mobile telephone as navigation proceeds. For example, to select or initiate a function (e.g. to open an address book function, enter a PIN security number or to alter the ring melody) a user has to understand (a) how to navigate to that function in order to select that function and (b) that the status of the telephone is such that the function can be selected or initiated. The technical problem of effectively enabling the user to understand this changing internal state has to date been inadequately addressed. Directly correlated with this effective understanding is the ease and speed of navigation. The object of the present invention is to provide an improved form of user interface which addresses this problem.

### SUMMARY OF THE PRESENT INVENTION

According to the invention there is provided a computing device comprising a display screen, the computing device being able to display on the screen a vertical, single column list with hard boundaries, the vertical single column list including four or more names or icons, each corresponding to an item that is selectable by moving a cursor to select that item by using a cursor control,
characterised in that device is programmed to arrange the names or icons relative to one another in the vertical, single column list so that the most commonly selected name or icon is (a) positioned, as a default, at least one position from the name or icon closest to one end of the vertical, single column list that can be reached using the cursor control and at least one position away from the name or icon closest to the other end of the vertical, single column list, and (b) visually differentiated from other names or icons in the list;
and the device is programmed to position the next most commonly selected name or icon at an end of the vertical, single list for rapid selection using the cursor control.

Typically, the selectable name or icon is visually differentiated from the other displayed names or icons; for example, it may be highlighted. The highlight appears as a default over the most commonly selected name or icon. Hence, in the default position (e.g. in one implementation, the initial presentation of the names or icons when the menu containing them is first opened), it is the most commonly selected name/icon which appears displaced from the end positions in the list or arrangement. Generally, it will be positioned in the *middle* of the list or arrangement and will be highlighted as a default, so that selecting this item requires minimal effort. The arrangement is the arrangement of the items on the display screen, rather than any logical arrangement of the names/icons in memory. Hence, one implementation envisages the most common menu item being placed, not at the top of the list, but instead in the *middle of the list.* This makes it faster to reach with many conventional navigation tools.

In another aspect, there is a computer program which when running on a computing device, enables the computing device to operate in accordance with the above aspects of the invention. The program may be an operating system.

### BRIEF DESCRIPTION OF THE FIGURES

The invention will be described with reference to the accompanying Figures, in which:
**Figure 1** is a screen shot showing an implementation of the present invention;
**Figure 2** is a schematic representation of a prior art menu arrangement in a mobile telephone;
**Figure 3** is a schematic representation of a menu arrangement in a mobile telephone in accordance with the present invention.

### DETAILED DESCRIPTION

An implementation of the present invention is based on the insight that the conventional approach of arranging names (e.g. of functions etc.) and/or icons in a column type menu list, with the most commonly selected name/icon at the *top* of the list, the second most common next down etc., is both an inefficient use of screen space and an inefficient use of navigation effort on the part of the user. Instead, it is better to place, as the default or starting view, the most common item *away from* the top (e.g. in the *middle*). Then, the second most commonly selected name/icon can be placed at the beginning or the end of the list and the third most commonly selected at the other end.

Since it is generally easy to scroll quickly to the start or end of an arrangement, and doing so requires little precision in using the scrolling controls, especially where the arrangement has hard boundaries - i.e. one cannot scroll off the end of the arrangement, this implementation enables the most important three names/icons to be easily and rapidly selected since they are respectively at the middle, one end and the other end of the menu. The conventional approach would allow only the single item at the top of the list and the item below it to be very readily and quickly selected. The present invention is particularly useful in computing devices in which scrolling is controlled using a cursor control which is a part of the device itself (such as a key, button, joystick etc.). However, it may also be employed where cursor control is achieved using a stylus, finger or voice activation.

In some implementations, selecting an item immediately adjacent to another item can be easily done - e.g. there is an effective nudge function. Then, other commonly selected names or icons can be placed immediately adjacent and on either side (e.g. above and below with a vertical menu list) of the most commonly selected name and/or icon. This results in five easily and quickly accessed names or icons - the default name/icon in the middle of a menu list, the two names/icons on either side and the two names/icons at the top and the bottom of the list.

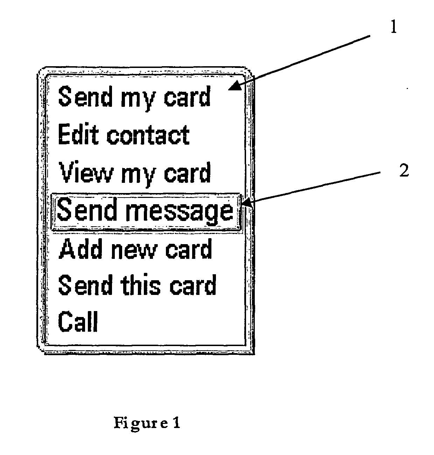

In one implementation, a default menu presentation shows a column type menu list, with one item in the middle of the displayed list (i.e. in the middle of the window containing the list) being highlighted. The column can be in landscape or portrait orientation. **Figure 1** shows a portrait display indicated generally at 1, in which the default menu for a messaging application (handling SMS and e-mail) places the most commonly used function ('Send Message') shown at 2 in the middle of a hard boundary column list as a default. The next most common function ('Call') is placed at the end of the list and then next most common function after that ('Send my card') is placed at the top.

Generally, the device manufacturer or applicable software supplier works out a single, fixed order for items in a single list (e.g. names of functions, contact data, icons etc.). That ordering is generally established through user groups and other kinds of user interface testing. It is then hard wired into ROM. But that can be somewhat inflexible. But in one implementation of the present invention, the most commonly selected items for a given user can be learned by the mobile telephone or defined by the system designer and/or user. Hence, the names or icons placed at the locations in the arrangement most quickly navigated to (for example, the middle position, adjacent positions, end positions) can vary depending on the requirements and/or useage patterns of the user. The relative positions of the items in the list can therefore adaptively alter relative to one another in dependence on the relative frequency of use of the items. The device can adapt to or learn from the useage patterns of the user so that frequently selected items can be placed where they can be most readily located (i.e in the middle of the list). 'Learning' in the device is based on looking at actual frequency of useage of different items; 'adaptation' in the device can be based on typical behaviour, for example by the user selecting a particular 'profile' which is associated with a given and typical ordering sequence of items in a menu list. That typical ordering sequence is pre-defined.

The skilled implementer will appreciate that users can generally recall in which menu list an item will appear, but are not that sensitive to recalling its precise position in that list. So for example, a typical user operating a web connected PC will recall that there exists a menu list of recently visited sites, but will not recall a particular position of a given site within this list. The present implementation exploits this selective recall by altering only the ordering of items in a list and does not confuse users by creating an entirely new list populated solely by frequently used functions.

The list may define all of the functions available within a given application; alternatively, where the application has too many functions to be included on a single, but very long list, there may be several lists. For example, on a desktop word processing such as the Word 2001 programme from Microsoft Corporation, there are multiple lists, such as the drop down list headed 'File', the drop down list headed 'Edit' etc. The 'File' drop down list includes, in descending order from the top of the list, the items 'Project gallery'; 'New Blank Document'; 'Open'; 'Open Web page'; 'Close'; 'Save'; 'Save As' etc. With the present implementation, the items in a 'File' drop down menu would be adaptively re-ordered so that, for example, if the 'Project Gallery' item was never selected; it would be demoted from being at the top of the list to at or near the bottom of the entire list or a functional sub-grouping within the list. Likewise, if the most common items selected were 'New Blank Document', then 'Save', then 'Save as' then 'Close', those four items would occupy respectively the four most prominent positions in the list.

Not all items in the single list need be visible at the same time; the present implementation may be particularly helpful in fact where the list is too long to be displayed in a single view since it removes the need to scroll down to frequently selected items which are off the end of the default view; instead, those frequently used items will be promoted up the list to more prominent positions.

A user may be given the option of selecting the factory determined default ordering of items or of allowing adaptive re-ordering to take place; an item 'Adaptive re-ordering' may therefore be included within each list (possibly at the bottom of each list), so that a user could readily select that item; the list will then re-order itself to reflect that user's subsequent usage patterns.

As noted above, it is also possible to define different 'profiles', each with a different template of item ordering. Returning to the word processing example, one profile might be 'Standard User'; then rarely used items like 'Project Gallery' and functions relating to web pages would be demoted from prominence. Commonly used functions, like 'New Blank Document', 'Save', 'Save as' and 'Close' would automatically be promoted to the four highest prominence positions, without the user needing to actually build up a track record of using those items the most frequently. However, as the user continues to use the system, further adjustments are made to the ordering of items. Conversely, a user handling a lot of web page based functions could select a different profile. For example, one might be called 'Web Intensive'; this would promote to prominence a different set of items; again, further and continuous adaptation would occur to fine tune the ordering to the user's work style. It will be appreciated that the prior art approaches of moving often used items away from their original list and to another list of commonly used items is flawed since it adds to user confusion by increasing uncertainty about item placement. The present approach of keeping items in the same list, but re-ordering them so that the most often used items are in the most prominent place, is far more effective, not least because it reflects and is consistent with how people organise their physical working environment - such as a desk- with the most commonly used items e.g. computer, telephone, pens, etc. close at hand.

In addition to menu list items which are pre-defined by the application, the present invention may also apply to items which are created or entered by the user, such as for example, contact telephone numbers, e-mail addresses or web/wap page URLs.

In use, an application logs the frequency of use of all menu options and the frequency of selection of data presented to the user. The order in which information is presented to the user is dynamically (and continuously) modified such that the user is able to select the most popular (for them) with the minimum effort.

### Examples:

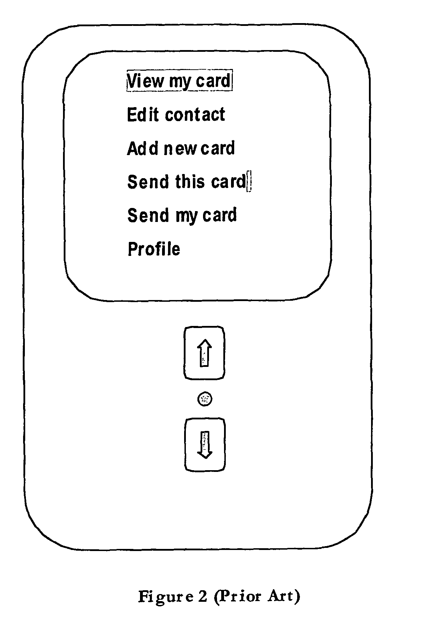

For an application menu with six options, the menu would conventionally be drawn with the most often selected at the top and other menu options in order beneath it to the least often selected at the bottom, with the default (highlighted) option being the topmost one. This allows the option that the user selects most often to be entered with the minimum interaction. Hence, in **Figure 2,** a simplified plan view of a mobile computing device is shown; the device has a screen displaying six options, or items, in a single list relating to card functionality (a card contains a user's personal details, such as name, e-mail, telephone etc. It can be beamed from typical mobile computing device to device using a standard IrD protocol). The order of items is conventionally defined by the device manufacturer or software vendor; in this case, the most prominent item is 'View my card', which a highlight appears over as a default.

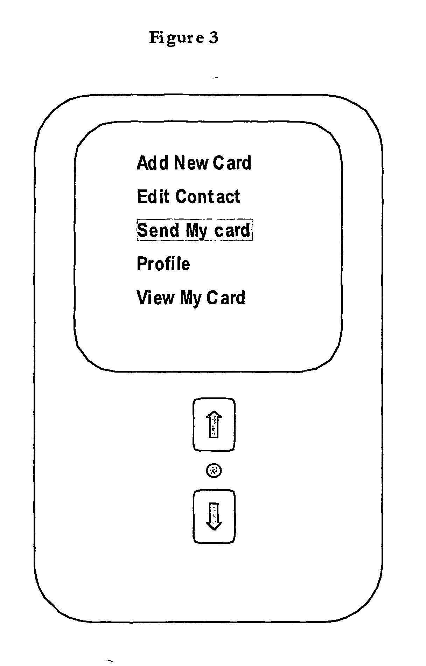

However, imagine that a user is at a conference and wishes to exchange cards with many tens of people. Then, he will be primarily using the 'Send My Card' and 'Add New Card' and functions; the present system can adaptively re-order the items so that after the user had gone through one or two cycles of 'Send My Card' and 'Add New Card', it would appreciate that these two items should be placed in the most prominent positions. The learning process can be readily accomplished by the software keeping a frequency of use count and re-ordering items to reflect their use frequency. The result is a default view as shown in **Figure 3,** which shows these functions promoted to the first and second ranks in the list, making navigating to them faster. 'Send My Card' is the most frequently used and hence appears in the middle of the menu. 'Add New Card' is second most frequently used and so appears at the top.

Another possibility is to select the 'Profile' item (also shown in **Figure 2**); this takes the user to a deeper list of different useage profiles; one item could be 'Exchange cards!'; if selected, the menu reverts to the card function list, but automatically re-orders the items to place 'Add new card' and 'Send my card' as shown in **Figure 3.** Further refinement within this list may occur as the adaptive learning process continues. The 'profile' change could be a permanent one (until another 'profile' is selected) or could be set to automatically return to the default (and typically learned) profile after a period of relative inactivity, so that after a meeting had commenced and people had finished exchanging cards, the card related menu would revert to the order shown in **Figure 2.** The profile change could also be pre-set by the user to last for a pre-defined time, so avoiding the inconvenience of (i) having to re-set the profile to its normal value or (ii) having the menu items displayed in an inappropriate ordering.

**Figures 2** and **3** show a relatively short list of items; where the number of items in a list is so large that not all items are visible at one time, the user conventionally has to scroll down to see all available items. Where the desired item would conventionally be off the default view screen, requiring the user to scroll down to locate it, the present invention is especially helpful and time saving since that item, if frequently used, can be promoted to the middle of the default screen or, at least, to a higher position within its applicable functional grouping, so bringing it within the default view.

In another example, an application presents a list of data (e.g. user generated or selected data) to the user in (historical) frequency order of use. For example, a list of contacts or telephone numbers is presented in order in which the data has been used, with the most popular first. In this way, the user can retrieve the most often used contact information more quickly than possible with earlier designs.

## Claims

1. A computing device comprising a display screen, the computing device being able to display on the screen a vertical, single column list with hard boundaries, the vertical single column list including four or more names or icons, each corresponding to an item that is selectable by moving a cursor to select that item by using a cursor control,
**characterised in that** device is programmed to arrange the names or icons relative to one another in the vertical, single column list so that the most commonly selected name or icon is (a) positioned, as a default, at least one position from the name or icon closest to one end of the vertical, single column list that can be reached using the cursor control and at least one position away from the name or icon closest to the other end of the vertical, single column list, and (b) visually differentiated from other names or icons in the list;
and the device is programmed to position the next most commonly selected name or icon at an end of the vertical, single list for rapid selection using the cursor control.

2. The computing device of Claim 1 in which the most commonly selected name or icon is positioned in the middle of the vertical list when the user first opens the list to view it.

3. The computing device of Claim 2 in which the third most commonly selected name or icon is positioned at the other end of the vertical list.

4. The computing device of Claim 1 in which commonly selected names or icons are arranged immediately adjacent and on either side of the most commonly selected name or icon in the vertical list.

5. The computing device of Claim 1 in which the identity of the most commonly selected items for a given user are learned by the computing device and/or defined by the user.

6. The computing device of Claim 5 in which the order of names or icons in the list is automatically re-ordered depending on use.

7. The computing device of Claim 1 in which the most commonly used name or icon is defined by a user.

8. The computing device of Claim 7 in which the order of items in the menu list is determined by a profile selected by the user.

9. The computing device of Claim 1 in which a highlight appears over the most commonly selected name or icon as a default.

10. A computer program which, when running on a computing device, causes the computing device to operate as a computing device as claimed in Claim 1 - 9.

11. The computer program of Claim 10, being an operating system program.

## Patentansprüche

1. Computer-Vorrichtung, umfassend einen Anzeigeschirm, wobei die Computer-Vorrichtung in der Lage ist, auf dem Schirm eine vertikale Einzelspaltenliste mit harten Umgrenzungen anzuzeigen, wobei die vertikale Einzelspaltenliste vier oder mehr Namen oder Icons beinhaltet, die alle einem Gegenstand entsprechen, der selektierbar ist, indem ein Cursor zum Selektieren dieses Gegenstand unter Verwendung einer Cursor-Steuerung bewegt wird,
**dadurch gekennzeichnet, dass** die Vorrichtung dafür programmiert ist, die Namen oder Icons relativ zueinander in der vertikalen Einzelspaltenliste so anzuordnen, dass der üblichsterweise selektierte Name oder Icon (a) als Standard um zumindest eine Position vom Namen oder Icon, das am nächsten an einem Ende der vertikalen Einzelspaltenliste liegt, die unter Verwendung der Cursor-Steuerung erreicht werden kann, und um zumindest eine Position vom Namen oder Icon, das am nächsten am anderen Ende der vertikalen Einzelspaltenliste liegt, positioniert wird, and (b) visuell von den anderen Namen oder Icons der Liste differenziert ist;
und die Vorrichtung dafür programmiert ist, den nächst üblichsterweise ausgewählten Namen oder Icon an einem Ende der vertikalen Einzelspaltenliste zur raschen Selektion unter Verwendung der Cursor-Steuerung zu positionieren.

2. Computer-Vorrichtung nach Anspruch 1, bei welcher der üblichsterweise ausgewählte Name oder Icon in der Mitte der vertikalen Liste positioniert wird, wenn der Anwender die Liste zum ersten Mal öffnet, um sie anzusehen.

3. Computer-Vorrichtung nach Anspruch 2, bei welcher der dritt-üblichsterweise ausgewählte Name oder Icon am anderen Ende der vertikalen Liste positioniert ist.

4. Computer-Vorrichtung nach Anspruch 1, bei welcher üblicherweise ausgewählte Namen oder Icons unmittelbar angrenzend an den und auf beiden Seiten des üblichsterweise ausgewählten Namens oder Icons in der vertikalen Liste angeordnet werden.

5. Computer-Vorrichtung nach Anspruch 1, bei welcher die Identität der üblichsterweise ausgewählten Gegenstände für einen gegebenen Anwender von der Computer-Vorrichtung erlernt und/oder vom Anwender definiert wird.

6. Computer-Vorrichtung nach Anspruch 5, bei welcher die Anordnung von Namen oder Icons in der Liste abhängig von der Verwendung automatisch umgeordnet wird.

7. Computer-Vorrichtung nach Anspruch 1, bei welcher der üblichsterweise verwendete Name oder Icon von einem Anwender definiert wird.

8. Computer-Vorrichtung nach Anspruch 7, bei welcher die Anordnung der Gegenstände in der Menuliste durch ein vom Anwender selektiertes Profil bestimmt ist.

9. Computer-Vorrichtung nach Anspruch 1, bei welcher eine Hervorhebung über dem üblichsterweise ausgewählten Namen oder Icon als ein Standard erscheint.

10. Computerprogramm, dass beim Ablauf auf einer Computer-Vorrichtung die Computer-Vorrichtung dazu veranlasst, als eine Computer-Vorrichtung wie in Anspruch 1 - 9 beansprucht zu arbeiten.

11. Computerprogramm nach Anspruch 10, welches ein Betriebssystemprogramm ist.

## Revendications

1. Dispositif informatique comprenant un écran d'affichage, le dispositif informatique pouvant afficher sur l'écran une liste sur simple colonne verticale avec des limites matérielles, la liste sur simple colonne verticale comportant quatre noms ou icônes ou plus, chacun correspondant à un élément qui peut être sélectionné en déplaçant un curseur afin de sélectionner cet élément en utilisant une commande de curseur,
**caractérisé en ce que** le dispositif est programmé de manière à agencer les noms ou icônes les uns par rapport aux autres sur la liste sur simple colonne verticale de sorte que le nom ou icône sélectionné le plus couramment est (a) positionné, comme par défaut, à au moins une position à partir du nom ou icône le plus proche de la fin de la liste sur simple colonne verticale qui peut être atteint en utilisant la commande de curseur et au moins une position à l'écart du nom ou icône le plus proche vers l'autre extrémité de la liste sur simple colonne verticale, et (b) pouvant être différencié visuellement par rapport aux autres noms ou icônes dans la liste ;
et le dispositif est programmé pour positionner le nom ou icône suivant le plus couramment sélectionné au niveau de la fin de la liste simple verticale afin d'assurer une sélection rapide en utilisant la commande de curseur.

2. Dispositif informatique selon la revendication 1, dans lequel le nom ou icône sélectionné le plus couramment est positionné au milieu de la liste verticale lorsque l'utilisateur ouvre la liste pour la première fois afin de la visualiser.

3. Dispositif informatique selon la revendication 2, dans lequel le troisième nom ou icône le plus couramment sélectionné est positionné à l'autre extrémité de la liste verticale.

4. Dispositif informatique selon la revendication 1, dans lequel les noms ou icônes couramment sélectionnés sont agencés de manière immédiatement adjacente et de chaque côté du nom ou icône le plus couramment sélectionné sur la liste verticale.

5. Dispositif informatique selon la revendication 1, dans lequel l'identité des éléments les plus couramment sélectionnés pour un utilisateur donné sont appris par le dispositif informatique et/ou définis par l'utilisateur.

6. Dispositif informatique selon la revendication 5, dans lequel l'ordre des noms ou icônes dans la liste est reclassé de manière automatique en fonction de l'utilisation.

7. Dispositif informatique selon la revendication 1, dans lequel le nom ou icône le plus couramment utilisé est défini par un utilisateur.

8. Dispositif informatique selon la revendication 7, dans lequel l'ordre des éléments sur la liste de menu est déterminé par un profil sélectionné par l'utilisateur.

9. Dispositif informatique selon la revendication 7, dans lequel la surbrillance apparaît par défaut sur le nom ou icône couramment sélectionné.

10. Programme informatique qui, lorsqu'il est exécuté sur un dispositif informatique fait fonctionne le dispositif informatique comme un dispositif informatique selon les revendications 1 à 9.

11. Programme informatique selon la revendication 10, qui constitue un programme de système d'exploitation.
